# EUROPEAN PATENT APPLICATION

(11) **EP 4 769 788 A1**
(43) Date of publication of application: **01.07.2026**
(21) Application number: 24894624.6
(22) Date of filing: 20.11.2024
(51) Int. Cl.: H01M 50/50, H01M 50/59, H01M 50/584, H01M 50/155, H01M 50/204

(54) **SECONDARY BATTERY ASSEMBLY AND SECONDARY BATTERY MODULE INCLUDING SAME**

(30) Priority: 21.11.2023 KR 20230162763
(71) Applicant: LG Energy Solution, Ltd., Seoul 07335 (KR)
(72) Inventor: LEE, Jae Ho, Daejeon 34122 (KR); KIM, Sang Hun, Daejeon 34122 (KR); YU, Hyung Kyun, Daejeon 34122 (KR); CHOI, Ji Eun, Daejeon 34122 (KR); LEE, Ji Sun, Daejeon 34122 (KR)
(74) Representative: Goddar, Heinz J.
(86) International application number: PCT/KR2024/018435
(87) International publication number: WO 2025/110732

(57) **Abstract**

The present disclosure relates to a secondary battery assembly. The secondary battery assembly according to the present disclosure may include an electrode assembly including a pair of electrode tabs; a pair of fixing frames coupled to two end portions of the electrode assembly to fix the electrode tabs of the electrode assembly; an outer packaging having an internal space configured to accommodate the electrode assembly and an outer packaging opening configured to communicate the internal space to an outside; and a pair of caps coupled to the fixing frames and configured to cover the outer packaging openings, and made of a conductive material in at least part to be electrically connected to the electrode assembly.

## Description

### TECHNICAL FIELD

### CROSS-REFERENCE TO RELATED APPLICATIONS

The present application claims priority to Korean Patent Application No. 10-2023-0162763 filed on November 21, 2023 in the Republic of Korea, the disclosure of which is incorporated herein by reference.

### TECHNICAL FIELD

The present disclosure relates to a secondary battery assembly.

### BACKGROUND ART

In general, as opposed to disposable primary batteries, secondary batteries refer to rechargeable batteries and are used in a wide range of applications including electronic devices such as mobile phones, laptop computers and camcorders or electric vehicles. In particular, compared to nickel-cadmium batteries or nickel-hydrogen batteries, lithium secondary batteries have large capacity and high energy density and their use is in a fast growing trend.

A pouch-type secondary battery may be generally manufactured by placing an electrode assembly including a positive electrode, a negative electrode and a separator interposed between the positive electrode and the negative electrode in a battery case of a pouch sheet in a stacked or wound state and injecting or filling an electrolyte solution.

The electrode assembly included in the secondary battery includes the separator and the electrode, and may be classified into a jelly-roll type electrode assembly in which a sheet-type positive electrode and a sheet-type negative electrode, each coated with an electrode active material, are wound with the separator interposed therebetween, a stack type electrode assembly in which a plurality of positive electrodes and a plurality of negative electrodes are stacked in a sequential order with separators interposed between them, and a stack/folding type electrode assembly in which stack type unit cells are wound with a long separation film, according to the method for manufacturing the electrode assembly.

However, a current collector included in the electrode assembly is formed from a very thin metal foil, and is easily deformed by an external force, so damage such as cracks or tears may occur to the surface by impacts applied to the electrode assembly. In particular, electrode tabs protruded from two sides of the electrode assembly may be pushed towards the electrode assembly due to the impacts applied to the electrode assembly in the length direction, applying impacts to the current collector, and by the impacts, the current collector is easily damaged by bending at an area where the electrode tab and the current collector meet.

Therefore, there is a need for a secondary battery capable of preventing the above-described problem, thereby stably protecting and fixing the electrode assembly and having a structure that is easy to electrically connect the electrode assembly to the outside.

The above-described background was possessed or obtained by the inventors in the conception of the present disclosure, and is not necessarily known technology that was publicly available before filing the present application.

### SUMMARY

### TECHNICAL PROBLEM

The present disclosure is designed to solve the above-described problem, and
an object according to an embodiment of the present disclosure is to provide a secondary battery assembly that allows easy electrical connection to the outside.

An object according to an embodiment of the present disclosure is to provide a secondary battery assembly capable of preventing an electrode tab from getting damaged by an external force.

### TECHNICAL SOLUTION

A secondary battery assembly according to the present disclosure may include an electrode assembly including a pair of electrode tabs, a pair of fixing frames coupled to two end portions of the electrode assembly to fix the electrode tabs of the electrode assembly, an outer packaging having an internal space configured to accommodate the electrode assembly and an outer packaging opening configured to communicate the internal space to an outside, and a pair of caps coupled to the fixing frames and configured to cover the outer packaging openings, and made of a conductive material in at least part to be electrically connected to the electrode assembly.

The fixing frame may include a metal portion having a slit into which the electrode tab is inserted, and made of a metal, and an insulation portion disposed around the metal portion.

The cap may include a terminal portion configured to contact the metal portion of the fixing frame to be electrically connected to the electrode tab, and a coupling portion disposed around the terminal portion and coupled to the fixing frame.

The coupling portion of the cap may be coupled and fixed to the insulation portion of the fixing frame.

The coupling portion and the insulation portion may be attached to each other by a magnetic force.

The insulation portion of the fixing frame may have a guide groove recessed from an outer surface to a predetermined width, and the coupling portion may have a guide protrusion that is engaged with the guide groove.

The guide protrusion and the guide groove may be extended along a length direction of the slit to be slidably coupled to each other.

The insulation portion may have an open U shape in a coupling direction of the electrode assembly.

The insulation portion may be configured to be elastically deformed in a width direction of the slit when the electrode tab is coupled to the slit.

The terminal portion may be made of a material including aluminum, copper or a mixture thereof.

The secondary battery assembly may further include a support frame extended between the pair of fixing frames to support the pair of fixing frames.

An outer peripheral surface of the fixing frame may be made of polypropylene to allow for sealing with the outer packaging.

There may be provided a secondary battery module including a plurality of secondary battery assemblies according to the present disclosure, wherein the secondary battery assembly may include an electrode assembly including a pair of electrode tabs, a pair of fixing frames configured to fix the electrode tabs of the electrode assembly, and electrically connected to the electrode tabs, and a pair of caps made of a conductive material in at least part, and coupled to the pair of fixing frames to be electrically connected to the electrode assembly.

### ADVANTAGEOUS EFFECTS

The secondary battery assembly according to an embodiment of the present disclosure may allow easy electrical connection to the outside.

The secondary battery assembly according to an embodiment of the present disclosure may prevent the electrode tab from getting damaged by an external force.

Besides, the effects of the present disclosure may include effects that can be easily predicted by those skilled in the art from the embodiments of the present disclosure.

### BRIEF DESCRIPTION OF THE DRAWINGS

FIG. 1 is a plan view of a secondary battery assembly according to Embodiment 1 of the present disclosure.
FIG. 2 is an exploded perspective view of a secondary battery assembly according to Embodiment 1 of the present disclosure.
FIG. 3 is a front view showing a fixing frame of a secondary battery assembly according to Embodiment 1 of the present disclosure.
FIG. 4 is a side view showing an electrode tab fixed by a fixing frame.
FIG. 5 is a partial enlarged diagram of FIG. 4.
FIG. 6 is a front view showing the structure of a cap of a secondary battery assembly according to Embodiment 1 of the present disclosure.
FIG. 7 is a diagram showing a coupling structure of a cap and a fixing frame of a secondary battery assembly according to Embodiment 1 of the present disclosure.
FIG. 8 is a diagram showing a cap and a fixing frame of a secondary battery assembly according to Embodiment 2 of the present disclosure before coupling.
FIG. 9 is a diagram showing a cap and a fixing frame of a secondary battery assembly according to Embodiment 2 of the present disclosure in a coupled state.
FIG. 10 is a perspective view showing a coupling process of a cap and a fixing frame of a secondary battery assembly according to Embodiment 2 of the present disclosure.
FIG. 11 is a perspective view showing a secondary battery assembly according to the present disclosure, covered with an outer packaging.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. The following description is one of aspects of the embodiments, and in describing an embodiment, a certain detailed description of known functions or elements is omitted for clarity of description of the present disclosure.

In affixing the reference numerals to the elements in each drawing, the identical or similar reference numerals are affixed to the identical or similar elements throughout the specification. An element including a shared function with an element included in any one embodiment will be described using the same name in other embodiment. The terms or words used in the specification and the appended claims should not be construed as limited to general and dictionary meanings and rather, should be interpreted based on the meanings and concepts corresponding to the technical aspect of the present disclosure on the basis of the principle that the inventor is allowed to define the terms appropriately for the best explanation.

Additionally, the present disclosure is not limited to the above-described embodiments, and a variety of modifications and changes may be made thereto by persons having ordinary skill in the technical field pertaining to the present disclosure from this disclosure. Therefore, the aspect of the present disclosure should not be limited to the disclosed embodiments, and it should be understood that the appended claims and their equal or equivalent variations fall within the scope of the present disclosure.

### Embodiment 1

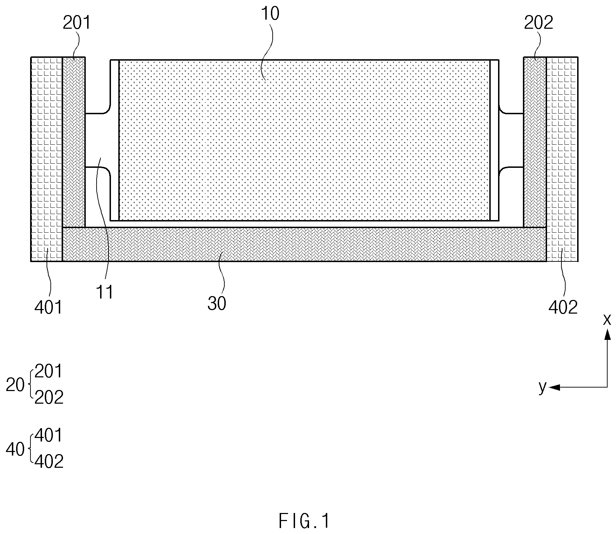

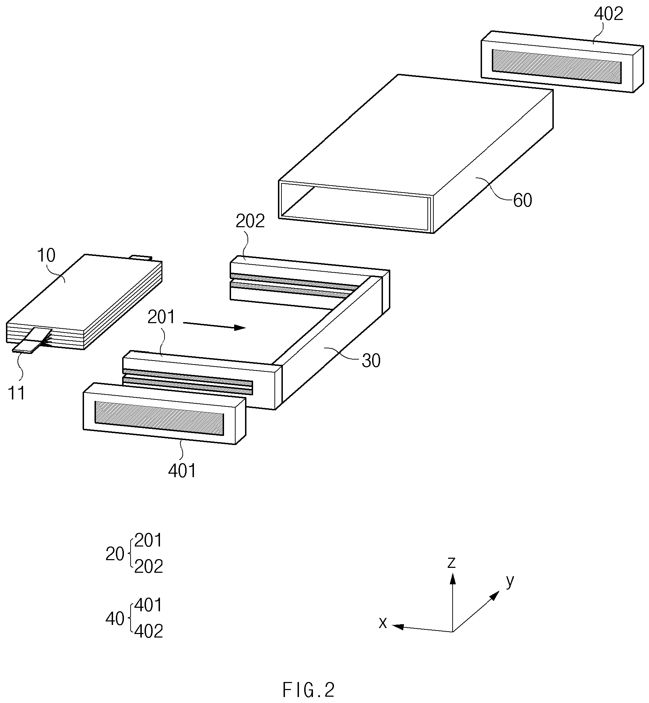

FIGS. 1 and 2 show the structure of a secondary battery assembly according to Embodiment 1 of the present disclosure. FIG. 1 is a plan view of the secondary battery assembly according to Embodiment 1 of the present disclosure, and FIG. 2 is an exploded perspective view of the secondary battery assembly according to Embodiment 1 of the present disclosure.

Referring to FIGS. 1 and 2, the secondary battery assembly according to Embodiment 1 of the present disclosure may include an electrode assembly 10, a fixing frame 20, and a cap 40.

### Electrode assembly 10

The electrode assembly 10 may include a pair of electrode tabs 11. The pair of electrode tabs 11 may be formed at two end portions of the electrode assembly 10 in the length direction. The electrode tabs 11 may include a positive electrode tab and a negative electrode tab, and may be protruded from the two end portions of the electrode assembly 10 in the length direction. The electrode tab 11 of the electrode assembly 10 may be in the form of a metal foil that is stacked in multilayer and fixed. The electrode tab 11 may be, for example, formed by fixing the multilayered metal foil by ultrasonic welding.

### Fixing frame 20

The fixing frame 20 may fix the electrode tab 11 of the electrode assembly 10.

The pair of fixing frames 20 may be spaced a predetermined distance apart from each other to fix the electrode tabs 11 at two ends of the electrode assembly 10, respectively. Each fixing frame 20 may be disposed at one end portion and the other end portion of the electrode assembly 10 to fix the electrode tab 11 at one end portion of the electrode assembly 10 and the electrode tabs11 at the other end portion. For example, the fixing frame 20 may include a first frame 201 disposed at one end portion of the electrode assembly 10 to fix the positive electrode tab (positive tab) and a second frame 202 disposed at the other end portion of the electrode assembly 10 to fix the negative electrode (negative tab).

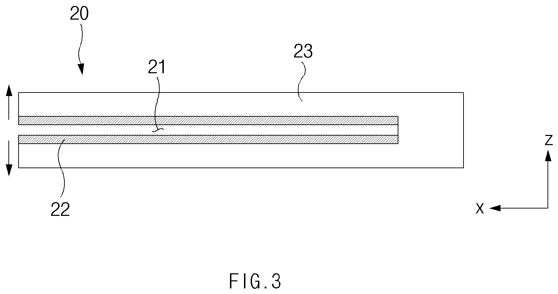

The fixing frame 20 may include a metal portion 22 having a slit 21 into which the electrode tab 11 is inserted and an insulation portion 23 disposed around the metal portion 22 (see FIG. 3). The structure and function of the fixing frame 20 will be described in more detail below with reference to FIG. 3.

### Cap 40

The cap 40 may be coupled to the fixing frame 20 to allow an electrical connection of the electrode assembly 10 to the outside. The cap 40 may include a pair of caps 40 coupled to the pair of fixing frames 20 in the length direction of the electrode assembly 10. Each cap 40 may overlap the fixing frame 20 in the length direction of the electrode assembly 10. The pair of caps 40 may include, for example, a first cap 401 that overlaps the first frame 201 of the fixing frame 20 and a second cap 402 that overlaps the second frame 202 of the fixing frame 20.

The cap 40 may be configured to cover an outer packaging opening of an outer packaging 60 as described below. The cap 40 may be located at a pair of outer packaging openings of the outer packaging 60 to seal the outer packaging openings.

The cap 40 may be electrically connected to the electrode assembly 10 to allow power transmission from the electrode assembly 10 to the outside. The cap 40 may be electrically connected to the fixing frame 20 that fixes the electrode tab 11 of the electrode assembly 10. That is, the cap 40 may be physically/electrically connected to the fixing frame 20. The cap 40 may be electrically connected to the electrode assembly 10 through the medium of the fixing frame 20.

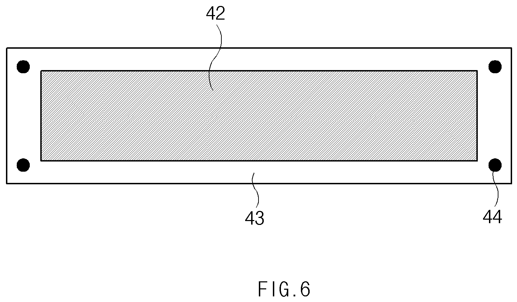

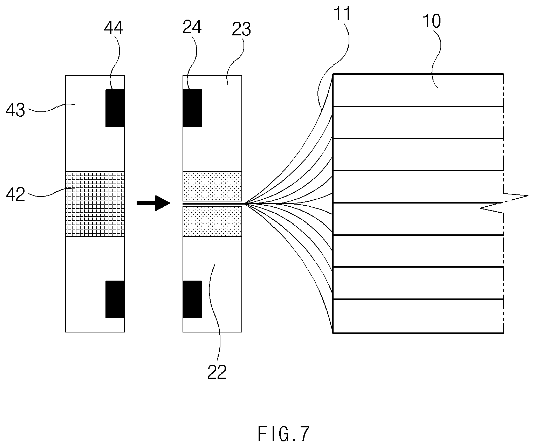

The cap 40 may include a terminal portion 42 configured to be electrically connected in contact with the metal portion 22 of the fixing frame 20 and a coupling portion 43 disposed around the terminal portion 42 (see FIG. 6). The coupling portion 43 may be mechanically coupled to the fixing frame 20, to be specific, the insulation portion 23 of the fixing frame 20 and the structure and function of the cap 40 will be described in more detail below with reference to FIGS. 6 and 7.

### Support frame 30

The secondary battery assembly according to Embodiment 1 of the present disclosure may further include a support frame 30.

The support frame 30 may be disposed between the pair of fixing frames 201, 202 spaced apart from each other, to support the pair of fixing frames 201, 202. Impacts may be applied in a direction of compressing the secondary battery assembly along the length direction (y axis) of the secondary battery assembly during the transfer of the secondary battery assembly, and the impacts may cause damage such as bending to the electrode tab 11 located at one end portion of the secondary battery assembly in the length direction. As described above, the electrode tab 11 may be formed at a current collector formed of a thin metal foil in thickness of about 10 µm and easily get damaged when deformation such as bending occurs, so the support frame 30 may be configured to support the pair of fixing frames 201, 202 that fix the electrode tab 11 to prevent the transmission of the impacts to the electrode tab 11.

The support frame 30 may have one end portion and the other end portion coupled to the end portion of the fixing frame 20 in the length direction, and may be coupled to the fixing frame 20 at one side of the electrode assembly 10.

The support frame 30 may be, for example, coupled to the fixing frame 20 through a fastener such as a screw, a rivet and the like, but is not limited thereto. The support frame 30 may be coupled to the insulation portion 23 of the fixing frame 20 as described below.

The support frame 30 may be formed with a predetermined thickness and width to prevent it from being deformed by the pressure applied along the length direction (y axis) of the electrode assembly 10, thereby preventing the transmission of the external force applied to the fixing frame 20 to the electrode assembly 10 and the electrode tab 11.

The support frame 30 may be formed in a prism shape having a predetermined cross-sectional shape to resist the force compressing the support frame 30. That is, the support frame 30 may be a linear element having the predetermined cross-sectional shape. The support frame 30 may be formed in a cuboid shape as shown, but is not limited thereto, and for example, may be formed in a cylindrical shape.

The support frame 30 may be made of an electrically insulating material to prevent electrical connection between the pair of fixing frames 201, 202, and may be made of, for example, plastics or rubber.

### Outer packaging 60

The outer packaging 60 may be formed by rolling or folding a film-type sheet. The outer packaging 60 may have an internal space for accommodating the electrode assembly 10, and the outer packaging opening configured to communicate the internal space with the outside. The outer packaging opening may include a pair of outer packaging openings along the length direction of the accommodated electrode assembly 10. The sheet that forms the outer packaging 60 may be a sheet including a metal layer of aluminum or stainless steel. The sheet may be a laminated sheet further including a resin layer stacked on the metal layer.

The outer packaging 60 may be sealed with the coupling portion 43 of the cap 40 as described below (see FIG. 6) to seal the electrode assembly 10 accommodated inside from the outside. An electrolyte solution may be injected into the internal space of the sealed outer packaging 60 to activate the electrode assembly 10.

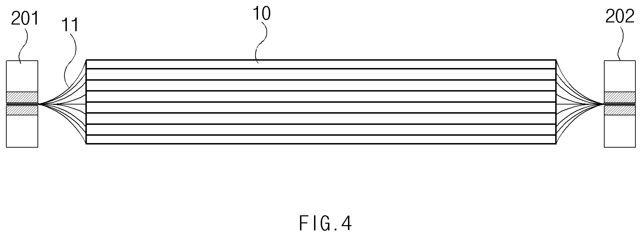

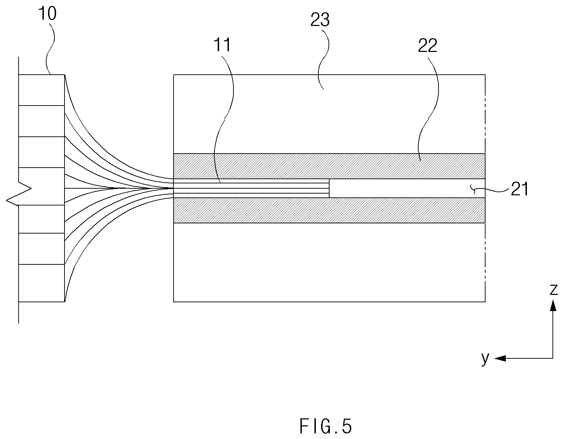

FIGS. 3 to 5 show the shape and the fixing structure of the fixing frame 20 of the secondary battery assembly according to the present disclosure. FIG. 3 is a front view showing the fixing frame 20 of the secondary battery assembly according to Embodiment 1 of the present disclosure. FIG. 4 is a side view showing the electrode tab 11 fixed by the fixing frame 20. FIG. 5 is a partial enlarged diagram of FIG. 4.

Referring to FIGS. 3 to 5, the fixing frame 20 may include the metal portion 22 and the insulation portion 23.

### Metal portion 22

The metal portion 22 may have the slit 21 to fix the electrode tab 11 of the electrode assembly 10 (see FIG. 3). The slit 21 may be recessed from one side of the fixing frame 20. The electrode tab 11 may be inserted into the slit 21, and the slit 21 may be formed with a width that is equal to or smaller than the thickness of the electrode tab 11 to fix the inserted electrode tab 11. For example, the slit 21 may include a shape having a gradual decrease in width along a direction in which the slit 21 is recessed, to further enhance the fixing strength for fixing the electrode tab 11 as the electrode tab 11 is inserted along the direction in which the slit 21 is recessed.

Each of the slits 21 of the pair of fixing frames 201, 202 may be recessed in the same direction with respect to one side of the fixing frame 20. The metal portion 22 may be formed along the direction in which the slit 21 is recessed from one side of the fixing frame 20, and may be disposed at two sides of the slit 21. The pair of metal portions 22 at the two sides of the slit 21 may be disposed parallel to each other so that they may face each other. That is, the metal portions 22 may have a shape of a pair of rectangular frames spaced a predetermined distance apart from each other. The distance between the pair of metal portions 22 may be equal to the width of the slit 21.

The metal portion 22 may contact the electrode tab 11 inserted into the slit 21 (see FIG. 5). The metal portion 22 may directly contact the electrode tab 11 inserted into the slit 21, and be electrically connected to the electrode tab 11. The metal portion 22 may be made of an electrically conductive metal, and may include, for example, at least one of gold, silver, copper or aluminum, but is not limited thereto.

### Insulation portion 23

The insulation portion 23 may be disposed around the metal portion 22. The insulation portion 23 may wrap the outer surface of the pair of metal portions 22 facing each other, and be configured to apply an elastic force to the metal portion 22 to cause the electrode tab 11 located between the pair of metal portions 22 to come into contact by the metal portion 22. As the insulation portion 23 wraps the outer surface of the pair of metal portions 22 facing each other, the insulation portion 23 may connect the other sides of the pair of metal portions 22 facing each other. The insulation portion 23 may be, for example, disposed around the metal portion 22 in a U ( 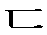 ) shape. When the electrode tab 11 is inserted into the slit 21 between the pair of metal portions 22, the insulation portion 23 may be elastically deformed as much as a predetermined displacement in the width direction of the slit. The electrode tab 11 of the electrode assembly 10 inserted into the slit 21 may be firmly fixed between the pair of metal portions 22 by the elastic force of the insulation portion 23.

The insulation portion 23 may include an electrically insulating material, and may include, for example, plastics or rubber.

FIG. 6 is a front view showing the structure of the cap 40 of the secondary battery assembly according to Embodiment 1 of the present disclosure. FIG. 7 is a diagram showing the coupling structure of the cap 40 and the fixing frame 20 of the secondary battery assembly according to Embodiment 1 of the present disclosure.

Referring to FIGS. 6 and 7, the cap 40 of the secondary battery assembly according to Embodiment 1 of the present disclosure may include the terminal portion 42 and the coupling portion 43. The cap 40 may overlap the fixing frame 20 in the length direction of the electrode assembly 10.

### Terminal portion 42

The terminal portion 42 may contact the metal portion 22 of the fixing frame 20. The terminal portion 42 may be electrically connected in contact with the metal portion 22 of the fixing frame 20. The terminal portion 42 may include a conductive material to be electrically connected to the metal portion 22. The terminal portion 42 may be formed in the shape of a rectangular metal frame having a predetermined thickness to conform to the shape of the outer periphery of the metal portion 22 of the fixing frame 20. The terminal portion 42 may include, for example, at least one of gold, silver, copper or aluminum, but is not limited thereto.

The terminal portion 42 may be configured to transmit the power of the electrode assembly 10 to the outside. In other words, the terminal portion 42 may act as a terminal to electrically connect the electrode assembly 10 to the outside. The terminal portion 42 may be electrically connected in contact with the metal portion 22 of the fixing frame 20 that fixes the electrode tab 11 of the electrode assembly 10 and thereby may be electrically connected to the electrode assembly 10. The terminal portion 42 of the cap 40 may be electrically connected to the electrode assembly 10 through the medium of the metal portion 22 of the fixing frame 20.

### Coupling portion 43

The coupling portion 43 may be disposed around the terminal portion 42 and coupled and fixed to the fixing frame 20. The coupling portion 43 may be disposed around the rectangular terminal portion 42. For example, the coupling portion 43 may be formed in a rectangle shape having a larger width and area than the terminal portion 42 and made of a nonmetal. The coupling portion 43 may conform to the shape of the outer periphery of the insulation portion 23 of the fixing frame 20. The coupling portion 43 may, for example, overlap the insulation portion 23 of the fixing frame 20.

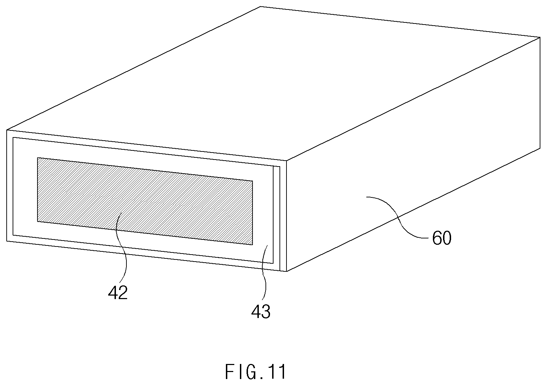

The coupling portion 43 may be made of polypropylene to allow for sealing with the outer packaging 60 (see FIG. 11) as described below.

Each of the coupling portion 43 of the cap 40 and the insulation portion 23 of the fixing frame 20 may have a coupler for coupling them each other. That is, the coupling portion 43 of the cap 40 may have a coupler for coupling with the insulation portion 23 of the fixing frame 20, and the insulation portion 23 of the fixing frame 20 may have a coupler for coupling with the coupling portion 43 of the cap 40.

For example, the insulation portion 23 of the fixing frame 20 may have a first coupling unit 24, and the coupling portion 43 of the cap 40 may have a second coupling unit 44.

The first coupling unit 24 and the second coupling unit 44 may be magnets that attract each other. In other words, the coupling portion 43 of the cap 40 and the insulation portion 23 of the fixing frame 20 may be coupled in such a manner that they are attached to each other by the magnetic force.

The first coupling unit 24 and the second coupling unit 44 may be disposed at a location at which they come into contact with each other when the insulation portion 23 and the coupling portion 43 overlap and may be attached to each other by the magnetic force. The first coupling unit 24 and the second coupling unit 44 may be magnets having the same size and shape, but is not limited thereto. For example, the first coupling unit 24 and the second coupling unit 44 may be cylindrical magnets having a predetermined thickness. The first coupling unit 24 and the second coupling unit 44 may be formed in a recessed shape from the contact surfaces of the insulation portion 23 and the coupling portion 43, respectively.

### Embodiment 2

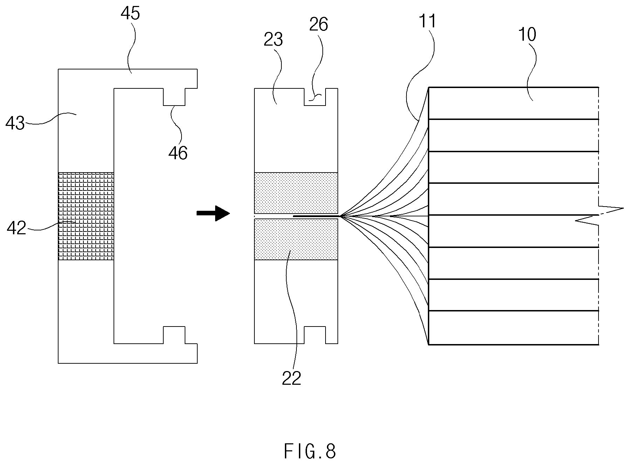

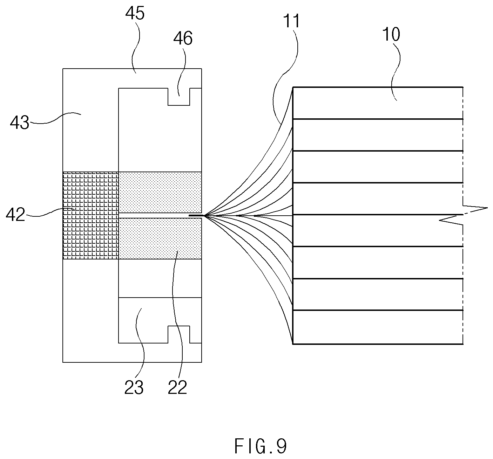

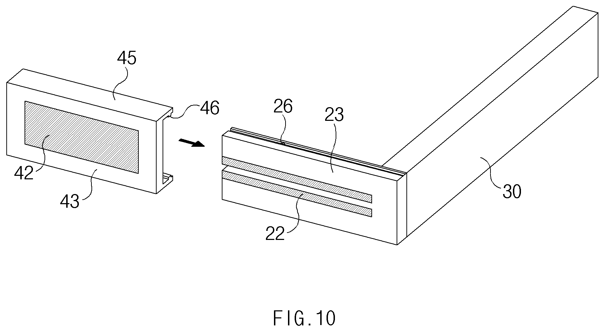

FIGS. 8 to 10 show the secondary battery assembly according to Embodiment 2 of the present disclosure. Specifically, FIG. 8 is a diagram showing the cap 40 and the fixing frame 20 of the secondary battery assembly according to Embodiment 2 of the present disclosure before coupling, and FIG. 9 is a diagram showing the cap 40 and the fixing frame 20 of the secondary battery assembly according to Embodiment 2 of the present disclosure in a coupled state. FIG. 10 is a perspective view showing a coupling process of the cap 40 and the fixing frame 20 of the secondary battery assembly according to Embodiment 2 of the present disclosure.

Embodiment 2 of the present disclosure is different from Embodiment 1 in that the coupling of the cap 40 and the fixing frame 20 is done through a physical engagement structure, not the magnetic force. Except the difference, it should be noted that the foregoing description of the secondary battery according to Embodiment 1 of the present disclosure may be equally applied to Embodiment 2, and accordingly the description shared with Embodiment 1 is omitted, and Embodiment 2 will be described based on differences from Embodiment 1.

Referring to FIGS. 8 to 10, the cap 40 and the fixing frame 20 of the secondary battery assembly according to Embodiment 2 of the present disclosure may be fixed and coupled by a mechanical method.

In this case, the insulation portion 23 of the fixing frame 20 may have a guide groove 26, and the coupling portion 43 of the cap 40 may have a guide protrusion 46. The guide groove 26 and the guide protrusion 46 may be engaged with each other.

### Guide groove 26 and guide protrusion 46

The guide groove 26 may be recessed from the outer peripheral surface of the insulation portion 23 to a predetermined width. For example, the guide groove 26 may be recessed at two end portions of the insulation portion 23 in the top-bottom direction. That is, the guide groove 26 may include a pair of guide grooves 26. The guide groove 26 may be extended to a predetermined width along the length direction of the insulation portion 23.

The coupling portion 43 of the cap 40 may include a guide arm 45 having the guide protrusion 46. The guide arm 45 may be protruded from two ends of the coupling portion 43 in the top-bottom direction toward the electrode assembly 10. The guide arm 45 may include a pair of guide arms 45 parallel to each other such that they may face each other, and may be extended along the length direction of the cap 40 in the shape of a flat plate having a predetermined thickness.

The guide protrusion 46 and the guide groove 26 may be extended along the length direction of the slit 21 so that they may be slidably coupled to each other.

The guide protrusion 46 may be protruded from the facing inner surfaces of the pair of guide arms 45. The guide protrusion 46 may be protruded with a width corresponding to the width of the guide groove 26 of the insulation portion 23. The guide protrusion 46 may be extended along the length direction of the guide arm 45. The guide protrusion 46 may be, for example, formed with a length corresponding to the length of the guide groove 26 of the insulation portion 23.

The guide protrusion 46 may be slidably coupled to the guide groove 26. That is, as the cap 40 slides to the fixing frame 20 in the length direction of the guide protrusion 46, the guide protrusion 46 of the cap 40 and the guide groove 26 of the fixing frame 20 may be engaged with each other to achieve sliding coupling. By adopting the mechanical coupling method of the cap 40 and the fixing frame 20, it may be possible to improve coupling stability and prevent the cap 40 from unintentionally slipping out of the fixing frame 20.

FIG. 11 is a perspective view showing the secondary battery assembly according to the present disclosure, covered with the outer packaging 60.

Referring to FIG. 11, the secondary battery assembly according to the present disclosure may further include the outer packaging 60 that covers the fixing frame 20, the support frame 30 and the cap 40 to accommodate the electrode assembly 10 inside.

### Outer packaging 60

The outer packaging 60 may be formed by rolling or folding a film-type sheet. The sheet that forms the outer packaging 60 may be a sheet including a metal layer of aluminum or stainless steel. The sheet may be a laminated sheet further including a resin layer stacked on the metal layer.

The outer packaging 60 may be sealed with the coupling portion 43 of the cap 40 to seal the electrode assembly 10 accommodated inside from the outside. The coupling portion 43 of the cap 40 may be sealed with the outer packaging 60 along the outer peripheral surface. The coupling portion 43 of the cap 40 may be made of polypropylene to allow for sealing with the outer packaging 60 as described above. The electrolyte solution may be injected into the internal space of the sealed outer packaging 60 to activate the electrode assembly 10.

The present disclosure may provide a secondary battery module. The secondary battery module according to the present disclosure may include a plurality of secondary battery assemblies described above. Specifically, each of the plurality of secondary battery assemblies included in the secondary battery module according to the present disclosure may include an electrode assembly including a pair of electrode tabs, a pair of fixing frames configured to fix the electrode tabs of the electrode assembly, and electrically connected to the electrode tabs, and a pair of caps made of a conductive material in at least part and coupled to the pair of fixing frames so as to be electrically connected to the electrode assembly.

Although the present disclosure has been hereinabove described with regard to a limited number of embodiments and drawings, the foregoing description is provided to describe the technical aspect of the present disclosure by way of example, and a variety of modifications and change may be made thereto by persons having ordinary skill in the technical field pertaining to the present disclosure without departing from the essential features of the present disclosure.

Therefore, the disclosed embodiments of the present disclosure are provided to describe the technical aspect of the present disclosure but not intended to be limiting, and the technical scope of the present disclosure is not limited by these embodiments. The scope of protection of the present disclosure should be interpreted by the appended claims, and it should be interpreted that all technical aspects in the equivalent scope are included in the scope of protection of the present disclosure.

### [List of Reference Numerals]

10: Electrode assembly
11: Electrode tab
20: Fixing frame
201: First frame
202: Second frame
21: Slit
22: Metal portion
23: Insulation portion
26: Guide groove
30: Support frame
40: Cap
401: First cap
402: Second cap
42: Terminal portion
43: Coupling portion
44: Coupling unit
45: Guide arm
46: Guide protrusion
60: Outer packaging

## Claims

1. A secondary battery assembly comprising:
an electrode assembly including a pair of electrode tabs;
a pair of fixing frames coupled to two end portions of the electrode assembly to fix the electrode tabs of the electrode assembly;
an outer packaging having an internal space configured to accommodate the electrode assembly and an outer packaging opening configured to communicate the internal space to an outside; and
a pair of caps coupled to the fixing frames and configured to cover the outer packaging openings, and made of a conductive material in at least part to be electrically connected to the electrode assembly.

2. The secondary battery assembly according to claim 1,
wherein the fixing frame includes:
a metal portion having a slit into which the electrode tab is inserted, and made of a metal; and
an insulation portion disposed around the metal portion.

3. The secondary battery assembly according to claim 2,
wherein the cap includes:
a terminal portion configured to contact the metal portion of the fixing frame to be electrically connected to the electrode tab; and
a coupling portion disposed around the terminal portion and coupled to the fixing frame.

4. The secondary battery assembly according to claim 3,
wherein the coupling portion of the cap is coupled and fixed to the insulation portion of the fixing frame.

5. The secondary battery assembly according to claim 4,
wherein the coupling portion and the insulation portion are attached to each other by a magnetic force.

6. The secondary battery assembly according to claim 4,
wherein the insulation portion of the fixing frame has a guide groove recessed from an outer surface to a predetermined width, and
wherein the coupling portion has a guide protrusion that is engaged with the guide groove.

7. The secondary battery assembly according to claim 6,
wherein the guide protrusion and the guide groove are extended along a length direction of the slit to be slidably coupled to each other.

8. The secondary battery assembly according to claim 2,
wherein the insulation portion has an open U shape in a coupling direction of the electrode assembly.

9. The secondary battery assembly according to claim 2,
wherein the insulation portion is configured to be elastically deformed in a width direction of the slit when the electrode tab is coupled to the slit.

10. The secondary battery assembly according to claim 3,
wherein the terminal portion is made of a material including aluminum, copper or a mixture thereof.

11. The secondary battery assembly according to claim 1, further comprising:
a support frame extended between the pair of fixing frames to support the pair of fixing frames.

12. The secondary battery assembly according to claim 1,
wherein an outer peripheral surface of the fixing frame is made of polypropylene to allow for sealing with the outer packaging.

13. A secondary battery module comprising:
a plurality of secondary battery assemblies,
wherein the secondary battery assembly includes:
an electrode assembly including a pair of electrode tabs;
a pair of fixing frames configured to fix the electrode tabs of the electrode assembly, and electrically connected to the electrode tabs; and
a pair of caps made of a conductive material in at least part, and coupled to the pair of fixing frames to be electrically connected to the electrode assembly.
